(19) **Europäisches Patentamt**
**European Patent Office**
**Office européen des brevets**

(11) **EP 1 787 085 B1**

(12) **FASCICULE DE BREVET EUROPEEN**

(45) Date de publication et mention
de la délivrance du brevet:
**13.03.2013 Bulletin 2013/11**

(51) Int Cl.:
***G01B 11/06*** *(2006.01)*     ***G01B 11/08*** *(2006.01)*

(21) Numéro de dépôt: **05798978.2**

(86) Numéro de dépôt international:
**PCT/FR2005/050716**

(22) Date de dépôt: **07.09.2005**

(87) Numéro de publication internationale:
**WO 2006/030149 (23.03.2006 Gazette 2006/12)**

(54) **PROCEDE DE MESURE D'OBJETS TRIDIMENSIONNELS PAR OMBROSCOPIE OPTIQUE A UNE SEULE VUE, UTILISANT LES LOIS OPTIQUES DE LA PROPAGATION DE LA LUMIERE**

VERFAHREN ZUM MESSEN DREIDIMENSIONALER OBJEKTE DURCH RÜCKBELEUCHTETE SCHATTENPROJEKTION MIT EINER EINZIGEN ANSICHT UNTER VERWENDUNG OPTISCHER GESETZE DER LICHTAUSBREITUNG

METHOD FOR MEASURING THREE-DIMENSIONAL OBJECTS BY SINGLE VIEW BACKLIT SHADOWGRAPHY USING OPTICAL LAWS OF LIGHT PROPAGATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.09.2004 FR 0452018**

(43) Date de publication de la demande:
**23.05.2007 Bulletin 2007/21**

(73) Titulaire: **Commissariat à l'Énergie Atomique et aux Énergies Alternatives 75015 Paris (FR)**

(72) Inventeurs:
- **JEANNOT, Laurent**
  **F-21120 MARCILLY SUR TILLE (FR)**
- **LAMY, Francis**
  **F-21230 ARNAY LE DUC (FR)**

(74) Mandataire: **Poulin, Gérard et al BREVALEX 95, rue d'Amsterdam 75378 Paris Cedex 8 (FR)**

(56) Documents cités:
**EP-A- 0 294 889**    **WO-A-2004/083772**
**FR-A- 2 651 312**    **US-A- 4 168 907**
**US-A- 4 227 806**

**Description**

**DOMAINE TECHNIQUE**

La présente invention concerne un procédé de mesure, ou caractérisation, sans contact, d'objets tridimensionnels, plus particulièrement d'objets tridimensionnels qui sont transparents à une lumière visible ou du moins translucides vis-à-vis de cette lumière.

L'invention s'applique notamment :

- à la mesure sans contact de l'épaisseur d'un objet sphérique (plus simplement appelé "sphère") creux et transparent ou d'un objet cylindrique (plus simplement appelé "cylindre") creux et transparent,
- à la mesure sans contact de l'épaisseur d'une couche transparente ou d'un dépôt transparent, placé(e) à l'intérieur d'une telle sphère ou d'un tel cylindre,
- à la mesure sans contact de la déformation ou de la rugosité de la surface interne d'une telle sphère ou d'un tel cylindre,
- à la mesure sans contact de la déformation ou de la rugosité d'une couche transparente ou d'un dépôt transparent, placé(e) à l'intérieur d'une telle sphère ou d'un tel cylindre, et
- à la mesure de l'indice de réfraction d'un matériau constitutif d'une telle sphère ou d'un tel cylindre que l'on a mis en forme.

**ETAT DE LA TECHNIQUE ANTERIEURE**

Pour mesurer sans contact un objet tridimensionnel, il est connu d'utiliser la tomographie tridimensionnelle.

Cependant, cette technique nécessite d'observer l'objet sous plusieurs incidences, ce qui n'est pas possible dans le cas où l'objet est placé dans une infrastructure complexe.

Dans le cas où l'objet est tridimensionnel, il est également connu d'utiliser une technique qui est appelée « tomographie à une seule vue ».

Selon cette dernière technique, on forme une image au moyen d'un code de calcul fondé sur un modèle d'objet choisi a priori.

L'image ainsi obtenue est comparée à une image radiographique simulée et le modèle est ensuite déformé de manière itérative jusqu'à ce que l'image simulée coïncide avec l'image expérimentale.

La reconstruction s'appuie sur une hypothèse de symétrie de révolution de l'objet.

La tomographie à une seule vue est ainsi une technique complexe et difficile à mettre en oeuvre.

En outre, pour mesurer des épaisseurs et des diamètres de sphères creuses, il est connu d'utiliser l'interférométrie et la radiographie X.

L'interférométrie est une méthode précise, utilisable dans une infrastructure complexe, mais elle est assez délicate à mettre en oeuvre.

Quant à la radiographie X, elle n'est pas utilisable lorsque l'objet devant être mesuré est placé dans une infrastructure complexe et ne peut être manipulé depuis l'extérieur de cette infrastructure.

Ainsi la mesure sans contact des dimensions d'un objet tridimensionnel et transparent (ou translucide) rencontre-t-elle de nombreuses difficultés, en particulier lorsque l'on veut mesurer une caractéristique interne de l'objet.

Certes un procédé d'ombroscopie (en anglais "backlit shadowgraphy") est décrit dans le document suivant FR 2852389 (demande de brevet français n° 03 50045, déposée le 12 mars 2003, invention de F. Lamy et al.).

Mais ce procédé nécessite la création d'une table de données à partir de simulations effectuées au moyen d'un logiciel approprié et cette table doit couvrir toute la gamme des dimensions des objets à observer. Les données permettent de remonter, par interpolation, à une mesure dimensionnelle de l'objet étudié ; mais, plus la gamme des dimensions que doit couvrir la table de données est large, plus la création de cette table est longue si l'on veut maintenir une certaine valeur de précision.

Dans le document US4227806A on détermine le rapport des indices de réfraction d'une préforme de fibre optique en utilisant une équation qui est basée sur des lois de Snell-Descartes et qui relie des paramètres opto-géométriques au résultat d'une observation effectuée directement sur une image de l'objet. Dans le document FR2651312A on détermine le diamètre d'un tube en utilisant une équation basée sur des lois de Snell-Descartes qui relie des paramètres opto-géométriques au résultat d'une observation effectuée directement sur une image de l'objet. Dans le document US4168907A on détermine le rayon d'une discontinuité d'indice ou une épaisseur d'une couche d'une fibre optique en utilisant une équation basée sur des lois de Snell-Descartes qui relie des paramètres opto-géométriques au résultat d'une observation effectuée directement sur une image de l'objet.

## EXPOSÉ DE L'INVENTION

La présente invention a pour but de remédier aux inconvénients précédents.

Elle utilise, pour ce faire, une technique de mesure par ombroscopie optique, qui s'applique à la caractérisation d'objets observables sous un seul angle de vue, notamment dans le cas où il est difficile d'accéder à ces objets. En outre, l'invention utilise de préférence un système d'acquisition d'images qui est mis au point sur un plan de l'objet étudié.

De plus, les objets que l'on caractérise au moyen du procédé objet de l'invention sont essentiellement des sphères creuses ou des cylindres creux. Or, le procédé de fabrication de la sphère ou du cylindre peut entraîner une modification de l'indice optique par rapport à celui du matériau massif (en anglais "bulk") à partir duquel on a fabriqué cette sphère ou ce cylindre.

La présente invention permet aussi de remédier à cet inconvénient : combinée à un moyen approprié, elle permet, comme on le verra, de déterminer l'indice de réfraction d'un objet à symétrie sphérique ou cylindrique.

Le procédé objet de l'invention a l'avantage d'utiliser les lois optiques de Snell-Descartes, relatives à la propagation de la lumière. De ce fait, l'observation ombroscopique est directement exploitée à l'aide d'une formule simple qui relie les caractéristiques optiques (indice de réfraction) et les dimensions de l'objet à l'image ombroscopique de ce dernier.

Ce procédé présente l'avantage d'être rapide et précis et permet de mesurer des dimensions très variées d'objets, quelle que soit la taille de ces derniers, dans la limite de résolution de l'appareil de mesure utilisé.

De façon précise, la présente invention concerne un procédé de mesure sans contact d'un objet tridimensionnel, cet objet tridimensionnel étant translucide ou transparent vis à vis d'une lumière visible, ce procédé étant caractérisé en ce que

- à l'aide des lois de Snell-Descartes relatives à la propagation de la lumière visible à travers l'objet, on établit une équation qui relie des paramètres opto-géométriques de l'objet au résultat d'une observation effectuée directement sur une image de l'objet, cette image comportant un anneau lumineux et étant acquise en observant cet objet avec la lumière visible, par ombroscopie optique à une seule vue, l'équation contenant le rayon de l'anneau lumineux,
- on acquiert cette image de l'objet,
- on effectue l'observation, on détermine le rayon de l'anneau lumineux à partir de l'image de l'objet et
- on détermine au moins un paramètre géométrique ou optique de l'objet à l'aide de l'équation du rayon de l'anneau lumineux et du résultat de l'observation.

De préférence, l'image est acquise au moyen d'un système d'acquisition d'images en lumière visible, en effectuant la mise au point de ce système d'acquisition d'images sur un plan de coupe de l'objet étudié.

On peut déterminer, conformément à l'invention, le paramètre géométrique ou optique d'un objet creux à partir de l'image d'une coupe plane de l'objet.

Selon un mode de mise en oeuvre particulier du procédé de l'invention, l'objet est une sphère creuse ou un cylindre creux, cet objet ayant ainsi une paroi, le paramètre géométrique de l'objet est l'épaisseur de cette paroi, l'image de la sphère creuse ou du cylindre creux comporte un anneau lumineux, l'équation est

$$\frac{\pi}{2} + \arcsin\left(\frac{R_a}{n_1 . R_2}\right) - \arcsin\left(\frac{R_a}{n_1 . R_1}\right) + \arcsin\left(\frac{R_a}{R_1}\right) - 2 . \arcsin\left(\frac{R_a}{R_2}\right) = 0$$

où $n_1$, $R_1$, $R_2$ et $R_a$ représentent respectivement l'indice de réfraction, le rayon (en anglais "radius") externe, le rayon interne de la sphère ou du cylindre et le rayon de l'anneau lumineux, on détermine le rayon externe de la sphère, ou du cylindre et le rayon de l'anneau lumineux à partir de l'image de l'objet et, $n_1$ étant connu, on détermine l'épaisseur $R_1$-$R_2$ de la paroi en fonction du rayon externe de la sphère ou du cylindre et en fonction du rayon de l'anneau lumineux, au moyen de l'équation.

Selon un mode de réalisation particulier de l'invention, l'objet est creux et contient une couche ou un dépôt d'une matière qui est transparente ou translucide, et l'on détermine l'épaisseur de ce dépôt ou de cette couche.

Dans ce cas, selon un autre mode de mise en oeuvre particulier du procédé de l'invention, l'objet est une sphère creuse ou un cylindre creux, le paramètre géométrique de l'objet est l'épaisseur de la couche ou du dépôt, l'image de la sphère creuse ou du cylindre creux comporte un anneau lumineux, l'équation est

$$\frac{\pi}{2} - \arcsin\left(\frac{R_a}{R_1}\right) + \arcsin\left(\frac{R_a}{n_1.R_1}\right) - \arcsin\left(\frac{R_a}{n_1.R_2}\right) + \arcsin\left(\frac{R_a}{n_2.R_2}\right) - \arcsin\left(\frac{R_a}{n_2.R_3}\right) = 0$$

où $n_1$, $n_2$, $R_1$, $R_2$, $R_3$ et $R_a$ représentent respectivement l'indice de réfraction de la sphère ou du cylindre, l'indice de réfraction de la couche ou du dépôt, le rayon externe de la sphère ou du cylindre, le rayon interne de la sphère ou du cylindre, le rayon interne de la couche ou du dépôt et le rayon de l'anneau lumineux, on détermine le rayon externe de la sphère ou du cylindre et le rayon de l'anneau lumineux à partir de l'image de l'objet et, $n_1$, $n_2$ et $R_2$ étant connus, on détermine l'épaisseur $R_2$-$R_3$ de la couche ou du dépôt en fonction du rayon externe de la sphère ou du cylindre et en fonction du rayon de l'anneau lumineux, au moyen de l'équation.

Le rayon externe peut être déterminé à l'aide de la méthode des dérivées directionnelles.

Selon un autre mode de réalisation particulier de l'invention, l'objet est creux et comporte une paroi interne, et l'on détermine la déformation ou la rugosité de cette paroi interne.

Selon un autre mode de réalisation particulier de l'invention, l'objet est une sphère creuse ou un cylindre creux, le paramètre optique de l'objet est l'indice de réfraction de cet objet, l'image de la sphère creuse ou du cylindre creux comporte un anneau lumineux, l'équation est

$$\frac{\pi}{2} + \arcsin\left(\frac{R_a}{n_1.R_2}\right) - \arcsin\left(\frac{R_a}{n_1.R_1}\right) + \arcsin\left(\frac{R_a}{R_1}\right) - 2.\arcsin\left(\frac{R_a}{R_2}\right) = 0$$

où $n_1$, $R_1$, $R_2$ et $R_a$ représentent respectivement l'indice de réfraction, le rayon externe, le rayon interne de la sphère ou du cylindre et le rayon de l'anneau lumineux, on détermine le rayon de l'anneau lumineux à partir de l'image de l'objet, on détermine $R_1$ et $R_2$ et l'on détermine l'indice de réfraction $n_1$ à la longueur d'onde de la lumière visible, avec laquelle on observe l'objet, au moyen de l'équation.

On peut déterminer $R_1$ et $R_2$ par radiographie.

Selon un mode de réalisation préféré de l'invention, on utilise un dispositif d'ombroscopie optique comprenant une source de lumière visible, des moyens de collimation de cette source et des moyens d'acquisition d'images, comportant une optique et un capteur d'images, cette optique étant placée entre l'objet et le capteur d'images et permettant de former l'image du plan de coupe de l'objet étudié sur le capteur d'images, et l'on règle la collimation de la source.

Le capteur d'images peut comprendre un dispositif à transfert de charges.

Le procédé objet de l'invention présente des avantages : son coût de mise en oeuvre est faible et le matériel nécessaire à cette mise en oeuvre est relativement facile à mettre en place dans une infrastructure complexe car ce matériel se limite à une source lumineuse (munie de moyens de collimation), une optique et une caméra.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés, sur lesquels :

- les figures 1A et 1B montrent respectivement une image réelle et une image simulée d'une sphère creuse,
- la figure 1C montre le profil d'une demi-ligne de l'image simulée de la figure 1B,
- la figure 2A illustre schématiquement le chemin préférentiel de propagation des rayons lumineux (en anglais "light rays") à travers la sphère creuse, rayons qui sont à l'origine de la formation de l'anneau lumineux présent sur les images des figures 1A et 1B,
- la figure 2B illustre schématiquement la géométrie utilisée pour le calcul de la relation entre divers paramètres $R_a$, $R_1$, $R_2$, $n_1$ qui seront définis par la suite, dans le cas d'une sphère creuse,
- la figure 2C illustre schématiquement la géométrie utilisée pour le calcul de la relation entre $R_a$, $R_1$, $R_2$, $R_3$, $n_1$, $n_2$ dans le cas d'une sphère creuse, revêtue d'une couche interne,
- la figure 3 montre un profil radial d'une image à traiter,
- la figure 4 est une vue schématique d'un dispositif permettant de mettre en oeuvre un procédé conforme à l'invention,
- la figure 5A montre l'image ombroscopique d'un cylindre creux, et
- la figure 5B montre le profil de l'image de la figure 5A.

## EXPOSÉ DÉTAILLÉ DE MODES DE RÉALISATION PARTICULIERS

Le principe de mesure, qui est utilisé dans l'invention pour la mesure d'un objet, est fondé sur l'observation de l'objet par ombroscopie en lumière visible, en association avec un modèle optique de propagation de la lumière.

Ce principe de mesure prend en compte les phénomènes physiques de propagation de la lumière dans les différents matériaux translucides ou transparents que comporte l'objet, notamment aux différentes interfaces de l'objet, et permet de raccorder la mesure directement effectuée sur l'image d'ombroscopie avec les grandeurs dimensionnelles physiques internes de l'objet étudié.

Certes, pour étudier un objet plan, l'ombroscopie est une méthode de mesure peu coûteuse et simple à utiliser. Par une mesure directe sur l'image de l'objet, il est possible de connaître par exemple la taille de l'objet.

Cependant, pour l'étude d'un objet en trois dimensions par ombroscopie, l'analyse directe de l'image ne fournit pas assez d'informations car l'image observée d'une coupe de l'objet n'est pas uniquement l'image de la coupe à travers l'objectif du dispositif d'ombroscopie utilisé mais aussi l'image de la coupe à travers l'objectif et l'objet lui-même.

Il est possible de retrouver les caractéristiques de la coupe étudiée si l'influence de l'objet sur la propagation du faisceau lumineux incident est connue. Cette influence peut être décrite par les équations de l'optique géométrique, qui traduisent les lois de Snell-Descartes.

Remarquons que la tomographie, qui est couramment utilisée pour étudier un objet tridimensionnel, nécessite d'observer cet objet sous plusieurs incidences, ce qui n'est pas possible dans le cas où l'objet est placé dans une infrastructure complexe.

Les auteurs de la présente invention ont notamment mené une étude sur des sphères creuses. Il est difficile d'en connaître l'épaisseur par une mesure directe sur leurs images ombroscopiques, car les rayons lumineux sont réfractés et réfléchis sur les différentes interfaces internes et externes de telles sphères.

Sur les images ombroscopiques d'une sphère creuse apparaît un anneau lumineux qui est issu d'un chemin de propagation particulier de la lumière dans la sphère. Cet anneau lumineux est l'élément principal sur lequel est fondé un procédé de mesure conforme à l'invention.

Les auteurs de la présente invention ont développé l'étude pour des sphères composées de plusieurs couches et ont montré que l'on peut mesurer l'épaisseur de la couche la plus interne par ombroscopie, dès lors que les autres caractéristiques dimensionnelles sont connues.

Dans ce qui suit, on décrit un exemple de l'invention et l'on commence par expliquer la mise en évidence d'une bande blanche sur l'image d'une sphère creuse, que l'on obtient par ombroscopie optique à une seule vue.

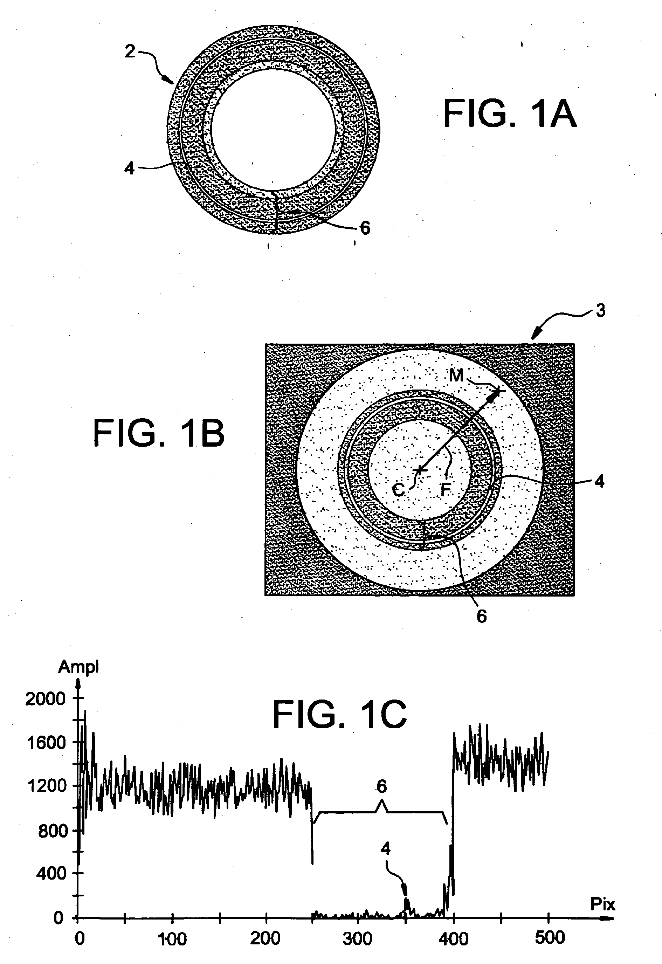

La figure 1A représente schématiquement une image 2 d'une sphère creuse réelle. Le rayon externe de cette sphère vaut 578 $\mu$m et son épaisseur vaut 6,6 $\mu$m.

On peut également former une image simulée 3 d'une telle sphère creuse (figure 1B). Dans l'exemple considéré, le rayon externe de la sphère simulée vaut 1000 $\mu$m et son épaisseur vaut 100 $\mu$m.

Sur la figure 1A, on observe la présence d'un anneau lumineux 4 et d'une zone noire 6 (les éléments correspondants de la figure 1B ayant les même références). On a constaté que :

• le rayon de l'anneau blanc est relié à l'épaisseur de la sphère creuse,
• la largeur de la zone noire dépend de l'ouverture numérique (« numerical aperture ») du système d'acquisition d'images que comporte le dispositif d'ombroscopie utilisé.

Afin de mieux apprécier la position de la bande blanche (ou anneau lumineux), on peut former un profil de l'image simulée, ce profil ayant pour origine le centre C de l'image simulée et comme point d'arrivée un point M à l'extérieur de la sphère, comme le montre la flèche F de la figure 1B. Dans l'exemple considéré, la distance CM vaut 1,25 mm.

La figure 1C montre le profil d'une demi-ligne de l'image simulée, les numéros des pixels (Pix) étant en abscisses et les amplitudes (niveaux de gris) en ordonnées (Ampl).

Sur cette figure 1C, on a repéré l'anneau lumineux 4 ainsi que la zone noire 6.

On considère maintenant l'utilisation des relations de l'optique géométrique dans la présente invention.

Les anneaux lumineux engendrés par le passage d'un faisceau lumineux collimaté à l'intérieur d'une sphère creuse transparente (ou translucide) peuvent avoir des trajets très complexes. A la manière des arcs en ciel, chaque anneau caractérise un mode de propagation à travers les dioptres rencontrés, avec des répartitions d'énergie qui varient en fonction du nombre de réfractions et de réflexions qui ont lieu.

Comme l'objectif d'observation utilisé effectue une mise au point dans le plan de l'équateur de la sphère creuse, il suffit de remonter, par construction géométrique, au point d'impact entre les rayons lumineux sortants et cet équateur pour retrouver la position de l'anneau lumineux observé pour un chemin de propagation donné.

On considère d'abord le cas d'une sphère creuse "monocouche", c'est-à-dire d'une simple sphère creuse, ne comportant aucune couche interne.

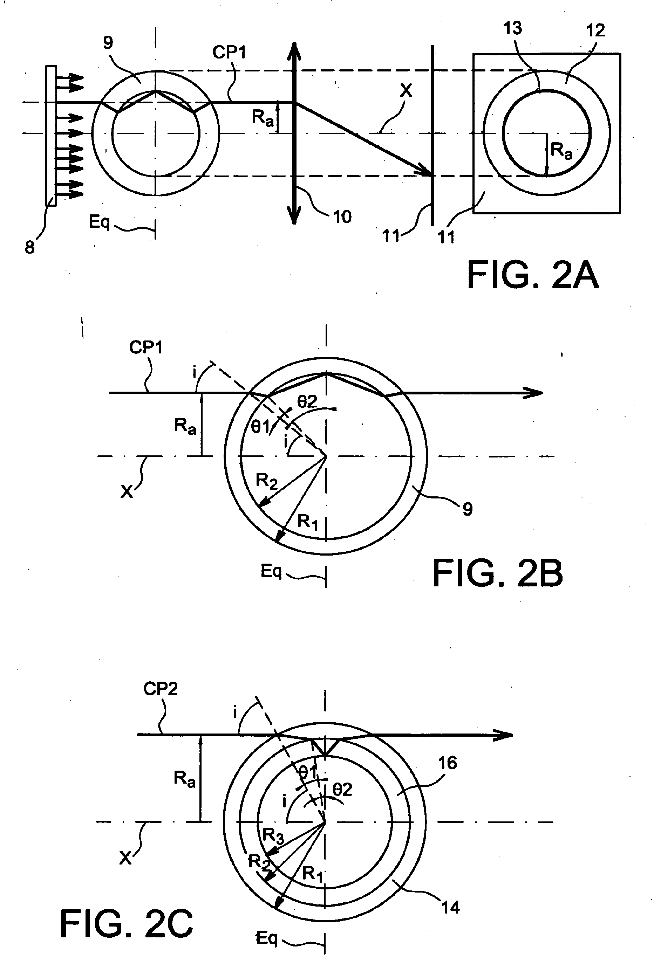

Par simulation, on a montré que le chemin de propagation des rayons lumineux à travers la sphère creuse, ces rayons étant à l'origine de la formation de l'anneau lumineux qui est présent sur les images des figures 1A et 1B, est préférentiellement celui qui est représenté sur la figure 2A.

Sur cette figure, on voit une source lumineuse collimatée 8, la sphère creuse transparente étudiée 9 et une lentille de focalisation 10. La sphère est placée entre la source et cette lentille. On forme l'image de la sphère sur un écran 11 par l'intermédiaire de la lentille.

On a représenté schématiquement un lancé de rayons (en anglais "ray tracing") pour une configuration d'observation à une distance 2f de la lentille, f étant la distance focale de cette lentille.

On a également représenté une vue de face de l'écran 11, sur laquelle l'image de la sphère a la référence 12. L'anneau lumineux que l'on observe sur cette image a la référence 13. Le rayon de cet anneau est noté $R_a$. Ce rayon est compté à partir de l'axe optique X de la lentille qui constitue également l'axe d'émission de la source 8. L'écran 11 est perpendiculaire à cet axe. Le plan équatorial de la sphère 9, qui est perpendiculaire à l'axe X, est noté Eq.

Si l'on prend comme rayon lumineux particulier celui qui ressort sans déviation par rapport à l'axe d'émission de la source, les calculs pour déterminer analytiquement la relation entre le rayon de l'anneau lumineux $R_a$, le rayon externe de la sphère $R_1$, son rayon interne $R_2$ et son indice de réfraction $n_1$ se simplifient par raison de symétrie.

Par simulation avec un logiciel de lancer de rayons, on s'aperçoit que le lancer de rayon de la figure 2A est caractéristique de l'anneau lumineux le plus intense observé.

Il suffit de considérer que le rayon de l'anneau lumineux est égal à la hauteur du rayon lumineux issu de la source collimatée qui encontre la surface intérieure de la sphère au niveau de son équateur.

La figure 2B représente un schéma que l'on utilise pour le calcul de la relation entre le rayon de l'anneau $R_a$, le rayon externe $R_1$ de la sphère creuse 9, le rayon interne $R_2$ de celle-ci et l'indice de réfraction $n_1$ du matériau dont est faite cette sphère.

Le calcul du rayon de l'anneau en fonction de $R_1$, $R_2$ et $n_1$ se fait alors de la manière exposée ci-après.

On applique les lois de la réfraction de Snell-Descartes au niveau de chaque dioptre rencontré par le rayon lumineux incident.

La relation entre $R_1$, $R_2$, $n_1$ et $R_a$ est obtenue en écrivant que la somme des angles i, θ1 et θ2 de la figure 2B est égale à 90°. Dans ce cas, le rayon lumineux qui est parallèle à la direction d'observation se réfléchit sur le dioptre à l'intérieur de la sphère, exactement en l'équateur de celle-ci.

Il en résulte facilement la relation suivante :

$$\frac{\pi}{2} + \arcsin\left(\frac{R_a}{n_1.R_2}\right) - \arcsin\left(\frac{R_a}{n_1.R_1}\right) + \arcsin\left(\frac{R_a}{R_1}\right) - 2.\arcsin\left(\frac{R_a}{R_2}\right) = 0 \qquad (1)$$

Une résolution numérique de l'équation (1) permet de déterminer la valeur de l'épaisseur $R_1$-$R_2$ lorsque l'on mesure $R_a$ et $R_1$ par ombroscopie, sachant que l'on connaît $n_1$ dès lors que l'on connaît la nature du matériau constitutif de la sphère et la longueur d'onde de la lumière émise par la source 8.

Considérons maintenant le cas d'une sphère creuse "bicouche". Un exemple d'une telle sphère est schématiquement représenté sur la figure 2C. Il s'agit d'une sphère creuse transparente ou translucide 14, qui est du genre de la sphère 9 de la figure 2A mais dont la paroi interne est en outre revêtue d'une couche translucide ou transparente 16.

Dans le cas d'une telle sphère bicouche, le chemin de propagation des rayons lumineux à travers la sphère, rayons qui sont à l'origine de la formation de l'anneau lumineux, est préférentiellement celui qui est représenté sur la figure 2C et qui a la référence CP2.

Cette figure 2C illustre schématiquement la géométrie qui est utilisée pour le calcul de la relation entre $R_a$, $R_1$, $R_2$, $R_3$, $n_1$ et $n_2$ dans le cas de la sphère creuse bicouche, tous ces paramètres étant définis ci-après.

De la même manière que précédemment, on obtient la relation suivante entre le rayon externe $R_1$ de la sphère 14, le rayon interne $R_2$ de cette sphère, le rayon interne $R_3$ de la couche 16, le rayon $R_a$ de l'anneau lumineux, l'indice de réfraction $n_1$ de la sphère et l'indice de réfraction $n_2$ de la couche :

$$\frac{\pi}{2} - \arcsin\left(\frac{R_a}{R_1}\right) + \arcsin\left(\frac{R_a}{n_1.R_1}\right) - \arcsin\left(\frac{R_a}{n_1.R_2}\right) + \arcsin\left(\frac{R_a}{n_2.R_2}\right) - \arcsin\left(\frac{R_a}{n_2.R_3}\right) = 0$$

$$(2)$$

Une résolution numérique de l'équation (2) permet de déterminer la valeur de l'épaisseur $R_2-R_3$ lorsque l'on mesure $R_a$ et $R_1$ par ombroscopie, sachant que l'on connaît $n_1$ et $n_2$ dès lors que l'on connaît les matériaux qui constituent respectivement la sphère 14 et la couche 16, la longueur d'onde de la lumière émise par la source utilisée pour l'ombroscopie, et le rayon $R_2$.

Ce dernier peut par exemple être déterminé à l'aide de l'équation (1), en appliquant à une sphère identique à la sphère 14 mais sans couche 16, la méthode que l'on a appliquée à la sphère 9.

On considère maintenant un algorithme de traitement d'images, que l'on utilise pour la mise en oeuvre d'un procédé conforme à l'invention.

Sur les images obtenues par ombroscopie à une seule vue pour une sphère creuse (image initiale et image après égalisation d'histogramme) nous pouvons détecter le rayon externe de la sphère, puis la position de la bande blanche.

Pour déterminer le rayon externe, nous utilisons de préférence la méthode des dérivées directionnelles. A ce sujet, on consultera le document suivant :

R. M. Haralick, "Digital Step Edges from Zero Crossing of Second Directional Derivatives", IEEE Transactions on pattern analysis and machine intelligence, vol. PAMI-6,N°1, Jan. 1984, pp 58-68.

Cette méthode s'appuie sur l'annulation du gradient de l'image et sur la maximisation de la dérivée seconde.

Ainsi, nous obtenons un centre et un rayon correspondant à la surface externe de la sphère. A partir du centre, des profils radiaux sont tracés à tous les degrés.

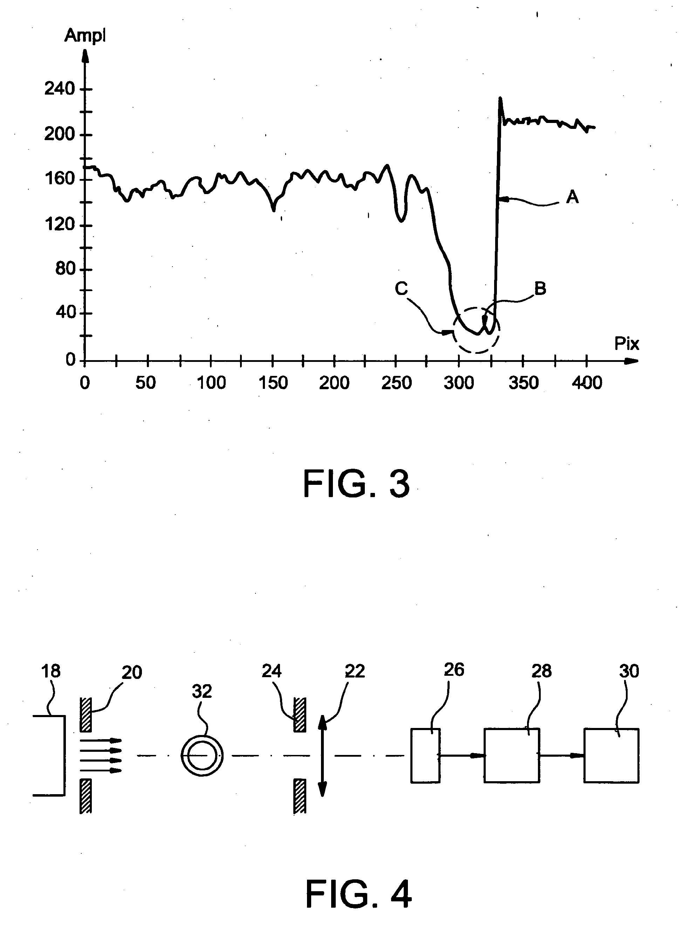

La figure 3 représente l'un de ces profils. Les numéros des pixels (Pix) sont portés en abscisses et les amplitudes (niveaux de gris) sont portées en ordonnées (Ampl).

Sur chaque profil, nous recherchons le point représentant la position de la surface externe (point A) et la position de la bande blanche (point B).

Le point A est obtenu par annulation de la dérivée seconde. Le point B est obtenu en réduisant la zone d'étude du profil (à la zone délimitée par le cercle C dans l'exemple représenté) et en recherchant le maximum local. Pour avoir une coordonnée sub-pixel, le profil est ajusté localement à une loi gaussienne.

Une fois ces opérations terminées, l'épaisseur de la sphère, pour ce rayon, est obtenue par l'utilisation de l'équation du modèle. Les surfaces interne et externe de la sphère sont reconstruites et il est alors possible de connaître l'épaisseur moyenne de la sphère sur l'équateur de celle-ci.

En ce qui concerne le procédé objet de l'invention, nous considérons avoir une incertitude de l'ordre de $\pm$ 3 pixels pour la détection du rayon externe, et de l'ordre de $\pm$ 0,5 pixel pour la détermination de la position de la bande blanche.

Le procédé ombroscopique de mesure de l'épaisseur d'une sphère creuse conformément à l'invention a l'avantage d'être peu onéreux et de pouvoir être mis en oeuvre très facilement et rapidement.

L'utilisation de ce procédé nécessite un choix judicieux de l'ouverture numérique du système d'acquisition d'images, que comporte le dispositif d'ombroscopie utilisé, et du diagramme d'émission de la source lumineuse que comporte ce dispositif, afin d'obtenir les conditions optimales pour visualiser correctement la bande blanche ou anneau lumineux.

L'incertitude de la mesure dépend essentiellement de la résolution spatiale de l'image. Dans les exemples considérés de l'invention, on observe le centre de la sphère afin de pouvoir tracer les profils radiaux. Ainsi, plus la sphère a un rayon important, plus le coefficient de conversion micromètre par pixel est grand, et donc plus l'incertitude de mesure est importante. Cette incertitude de mesure dépend donc du rayon de la sphère étudiée.

L'appareillage utilisé pour l'ombroscopie est classique. Il comprend une source lumineuse collimatée, qui émet une lumière visible et qui est associée à un système d'acquisition d'images qui est destiné à être mis au point sur un plan de l'objet étudié.

La figure 4 est une vue schématique d'un dispositif d'ombroscopie pour la mise en oeuvre du procédé objet de l'invention.

Ce dispositif comprend une source 18 de lumière visible, des moyens 20 de collimation réglables de cette source et des moyens d'acquisition d'images, comportant une optique 22 qui est munie de moyens 24 de variation de l'ouverture numérique de cette optique (ou qui possède l'ouverture numérique adéquate).

Cette dernière est suivie par un capteur CCD 26 qui est muni de moyens 28 de traitement d'images, auxquels est associé un dispositif d'affichage 30.

Une sphère creuse 32, que l'on veut étudier, est placée entre la source 18 et l'optique 22. Cette optique 22 permet de former l'image d'un plan de coupe de la sphère creuse 32 sur le capteur CCD 26.

L'invention concerne essentiellement la méthode utilisé pour déterminer l'épaisseur de la sphère creuse, à savoir :

- détermination des conditions expérimentales propices à une détection aisée du rayon de l'anneau lumineux (ouverture numérique du système d'acquisition d'images, collimation de la source lumineuse),
- élaboration de l'équation mathématique s'appuyant sur les caractéristiques de l'objet étudié et sur le phénomène observé sur l'image (rayon externe, épaisseur de la sphère, rayon de l'anneau lumineux et indice de réfraction de l'objet), et
- traitement d'image associé pour déterminer les paramètres initiaux (rayon de l'anneau lumineux et rayon externe de la sphère) pour enfin déterminer la dimension désirée de l'objet (épaisseur de la sphère creuse, dans l'exemple considéré).

Le même procédé peut être mis en oeuvre pour la caractérisation de l'épaisseur d'un cylindre creux. Pour cette mise en oeuvre, on peut encore utiliser le dispositif de la figure 4 (même source lumineuse et même dispositif d'acquisition d'images), en disposant le cylindre à la place de la sphère 32.

Sur l'image ombroscopique obtenue apparaît une bande blanche qui est liée à l'épaisseur et au rayon externe du cylindre.

L'équation (1) s'applique également à un cylindre creux. De même, l'équation (2) s'applique à un cylindre creux, dont la paroi interne est revêtue d'une couche (ou d'un dépôt) translucide ou transparent.

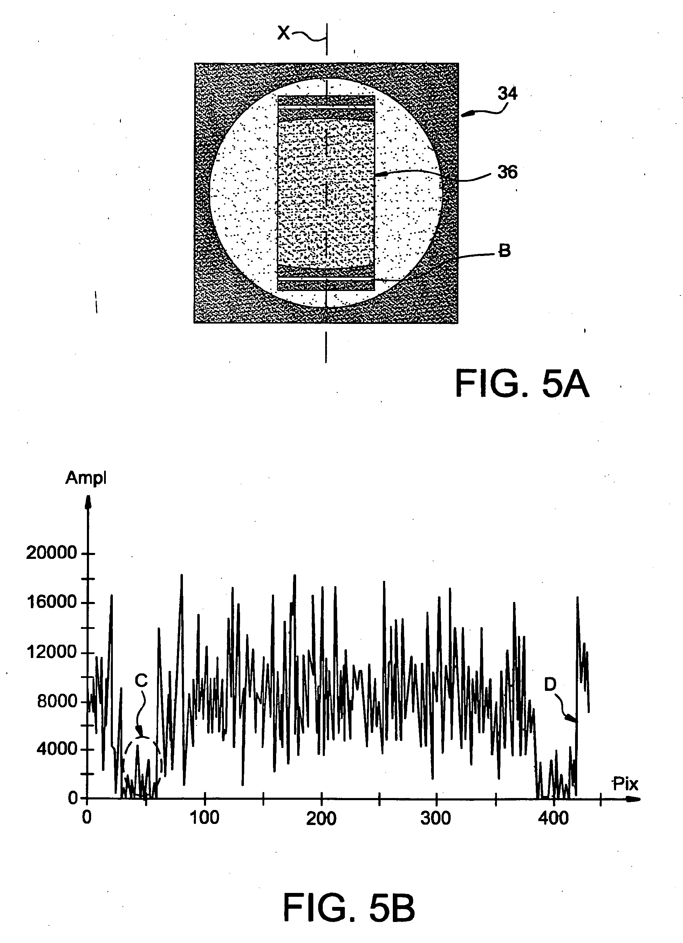

La figure 5A montre l'image ombroscopique 34 d'un cylindre creux 36 de 1000 $\mu$m de rayon externe et de 300 $\mu$m d'épaisseur. Le profil de cette image est représenté sur la figure 5B. Ce profil est tracé suivant la ligne X de la figure 5A.

On observe une bande blanche B sur la figure 5A. Cette bande blanche correspond à la zone C sur la figure 5B. Sur cette dernière, le bord du cylindre est repéré par la flèche D. La position de la bande blanche est liée au rayon externe et à l'épaisseur du cylindre creux.

La connaissance de la distance entre le centre de l'anneau lumineux et chaque point de ce dernier permet de déterminer l'état de surface de la paroi interne du cylindre creux, en termes de déformation et de rugosité, selon un équateur ou deux génératrices du cylindre, dans le plan d'observation (qui est perpendiculaire à l'axe optique d'observation).

Dans le cas d'un objet bicouche, c'est-à-dire d'un objet creux sur la paroi interne duquel est formée une couche, dite couche interne, le procédé objet de l'invention permet de mesurer l'épaisseur de la couche interne sous réserve d'une connaissance de l'épaisseur de la paroi de l'objet, dite couche externe, que l'on mesure alors au préalable. La rugosité et la déformation de la surface interne de l'objet bicouche peuvent aussi être mesurées.

Ce qui précède s'applique aussi bien aux cylindres qu'aux sphères.

Le procédé objet de l'invention est utilisable quel que soit le diamètre de la sphère ou du cylindre. En effet, l'utilisation d'une chaîne optique avec un coefficient de grandissement adapté permet d'observer l'ensemble d'un objet sur un capteur CCD de 6,6 mm par 8,8 mm. Il est même possible d'observer une seule partie de l'objet, à condition d'avoir un système optique approprié.

La seule restriction, qui se pose pour la mesure d'épaisseur de sphère creuse, est qu'elle soit assez épaisse pour une distinction aisée de la bande blanche, étant donné la résolution du système optique.

Lors de la mesure de l'épaisseur d'un objet creux, par exemple d'une sphère creuse, conformément à l'invention, on doit tenir compte de la résolution du système optique utilisé pour cette mesure : pour une résolution donnée, la sphère doit être suffisamment épaisse, pour que l'on puisse distinguer aisément la bande blanche.

La présente invention concerne aussi la caractérisation de l'indice de réfraction d'objets transparents ou translucides, plus particulièrement de tels objets qui sont en outre sphériques ou cylindriques.

En utilisant la relation (1), on peut déterminer, par ombroscopie et de manière non destructive, l'indice de réfraction d'une sphère ou d'un cylindre dont on aura caractérisé les dimensions au moyen d'un autre système de mesure, de préférence un système de radiographie.

Cet indice de réfraction est alors donné à la longueur d'onde de la source lumineuse qui est utilisée pour faire la mesure ombroscopique.

En général, la mesure d'indice se fait par ellipsométrie mais ne concerne que des objets plans. La présente invention permet de remédier à cet inconvénient car elle s'applique aux objets tridimensionnels.

En outre, les contraintes mécaniques engendrées lors de la fabrication d'objets, plus particulièrement d'objets sphériques ou cylindriques, peuvent entraîner une modification de l'indice de réfraction de tels objets. L'invention permet avantageusement de connaître le nouvel indice de réfraction.

**Revendications**

1. Procédé de mesure sans contact d'un objet tridimensionnel (9, 14, 32), cet objet tridimensionnel étant translucide ou transparent vis à vis d'une lumière visible, ce procédé étant **caractérisé en ce que**

- à l'aide des lois de Snell-Descartes, relatives à la propagation de la lumière visible à travers l'objet, on établit une équation qui relie des paramètres opto-géométriques de l'objet au résultat d'une observation effectuée directement sur une image de l'objet, cette image comportant un anneau lumineux et étant acquise en observant cet objet avec la lumière visible, par ombroscopie optique à une seule vue, l'équation contenant le rayon de l'anneau lumineux,
- on acquiert cette image de l'objet,
- on effectue l'observation, on détermine le rayon de l'anneau à partir de l'image de l'objet et
- on détermine au moins un paramètre géométrique ou optique de l'objet à l'aide de l'équation, au rayon de l'anneau lumineux et du résultat de l'observation.

2. Procédé selon la revendication 1, dans lequel l'image est acquise au moyen d'un système d'acquisition d'images en lumière visible, en effectuant la mise au point de ce système d'acquisition d'images sur un plan de coupe de l'objet étudié.

3. Procédé selon la revendication 2, dans lequel l'objet (9, 14, 32) est creux et l'on détermine le paramètre géométrique ou optique de cet objet creux à partir de l'image d'une coupe plane de l'objet.

4. Procédé selon la revendication 3, dans lequel l'objet (9, 14) est une sphère creuse ou un cylindre creux, cet objet ayant ainsi une paroi, le paramètre géométrique de l'objet est l'épaisseur de cette paroi, l'image de la sphère creuse ou du cylindre creux comporte un anneau lumineux (13), l'équation est

$$\frac{\pi}{2} + \arcsin\left(\frac{R_a}{n_1.R_2}\right) - \arcsin\left(\frac{R_a}{n_1.R_1}\right) + \arcsin\left(\frac{R_a}{R_1}\right) - 2.\arcsin\left(\frac{R_a}{R_2}\right) = 0$$

où $n_1$, $R_1$, $R_2$ et $R_a$ représentent respectivement l'indice de réfraction, le rayon externe, le rayon interne de la sphère ou du cylindre et le rayon de l'anneau lumineux, on détermine le rayon externe de la sphère ou du cylindre et le rayon de l'anneau lumineux à partir de l'image de l'objet et, $n_1$ étant connu, on détermine l'épaisseur $R_1$-$R_2$ de la paroi en fonction du rayon externe de la sphère ou du cylindre et en fonction du rayon de l'anneau lumineux, au moyen de l'équation.

5. Procédé selon l'une quelconque des revendications 2 à 4, dans lequel l'objet (14) est creux et contient une couche (16) ou un dépôt d'une matière qui est transparente ou translucide, et l'on détermine l'épaisseur de ce dépôt ou de cette couche.

6. Procédé selon la revendication 5, dans lequel l'objet (14) est une sphère creuse ou un cylindre creux, le paramètre géométrique de l'objet est l'épaisseur de la couche (16) ou du dépôt, l'image de la sphère creuse ou du cylindre creux comporte un anneau lumineux, l'équation est

$$\frac{\pi}{2} - \arcsin\left(\frac{R_a}{R_1}\right) + \arcsin\left(\frac{R_a}{n_1.R_1}\right) - \arcsin\left(\frac{R_a}{n_1.R_2}\right) + \arcsin\left(\frac{R_a}{n_2.R_2}\right) - \arcsin\left(\frac{R_a}{n_2.R_3}\right) = 0$$

où $n_1$, $n_2$, $R_1$, $R_2$, $R_3$ et $R_a$ représentent respectivement l'indice de réfraction de la sphère ou du cylindre, l'indice de réfraction de la couche ou du dépôt, le rayon externe de la sphère ou du cylindre, le rayon interne de la sphère ou du cylindre, le rayon interne de la couche ou du dépôt et le rayon de l'anneau lumineux, on détermine le rayon externe, de la sphère ou du cylindre et le rayon de l'anneau lumineux à partir de l'image de l'objet et, $n_1$, $n_2$ et $R_2$ étant connus, on détermine l'épaisseur $R_2$-$R_3$ de la couche ou du dépôt en fonction du rayon externe de la sphère ou du cylindre et en fonction du rayon de l'anneau lumineux, au moyen de l'équation.

7. Procédé selon l'une quelconque des revendications 4 et 6, dans lequel on détermine le rayon externe ($R_1$) à l'aide de la méthode des dérivées directionnelles.

**8.** Procédé selon l'une quelconque des revendications 2 à 7, dans lequel l'objet est creux et comporte une paroi interne, et l'on détermine la déformation ou la rugosité de cette paroi interne.

**9.** Procédé selon la revendication 3, dans lequel l'objet (9, 14) est une sphère creuse ou un cylindre creux, le paramètre optique de l'objet est l'indice de réfraction de cet objet, l'image de la sphère creuse ou du cylindre creux comporte un anneau lumineux (14), l'équation est

$$\frac{\pi}{2} + \arcsin\left(\frac{R_a}{n_1.R_2}\right) - \arcsin\left(\frac{R_a}{n_1.R_1}\right) + \arcsin\left(\frac{R_a}{R_1}\right) - 2.\arcsin\left(\frac{R_a}{R_2}\right) = 0$$

où $n_1$, $R_1$, $R_2$ et $R_a$ représentent respectivement l'indice de réfraction, le rayon externe, le rayon interne de la sphère ou du cylindre et le rayon de l'anneau lumineux, on détermine le rayon de l'anneau lumineux à partir de l'image de l'objet, on détermine $R_1$ et $R_2$ et l'on détermine l'indice de réfraction $n_1$ à la longueur d'onde de la lumière visible avec laquelle on observe l'objet, au moyen de l'équation.

**10.** Procédé selon la revendication 9, dans lequel on détermine $R_1$ et $R_2$ par radiographie.

**11.** Procédé selon l'une quelconque des revendications 2 à 10, dans lequel on utilise un dispositif d'ombroscopie optique comprenant une source de lumière visible, des moyens (20) de collimation de cette source et des moyens (22, 24, 26) d'acquisition d'images, comportant une optique (22) et un capteur d'images (26), cette optique étant placée entre l'objet et le capteur d'images et permettant de former l'image du plan de coupe de l'objet étudié sur le capteur d'images, et l'on règle la collimation de la source.

**12.** Procédé selon la revendication 11, dans lequel le capteur d'images comprend un dispositif à transfert de charges.

**Claims**

**1.** Method for contactless measurement of a three-dimensional object (9, 14, 32), said three-dimensional object being translucent or transparent to visible light, said method being **characterised in that**:

- by way of the Snell-Descartes laws relating to the propagation of visible light through the object, an equation is established that associates the optogeometric parameters of the object with the result of an observation performed directly on an image of the object, said image having a light ring and being acquired by observing said object with the visible light, by single-view optical shadowgraphy, the equation containing the radius of the light ring,
- this image of the object is acquired,
- the observation is performed, the radius of the light ring is determined from the image of the object, and
- at least one geometric or optical parameter of the object is determined using the equation, the radius of the light ring and the result of the observation.

**2.** Method according to claim 1, wherein the image is acquired by means of a visible light image acquisition system, by focusing said image acquisition system on a section plane of the object studied.

**3.** Method according to claim 2, wherein the object (9, 14, 32) is hollow, and the geometric or optical parameter of said hollow object is determined on the basis of the image of a planar section of the object.

**4.** Method according to claim 3, wherein the object (9, 14) is a hollow sphere or a hollow cylinder, said object thus having a wall, the geometric parameter of the object is the thickness of this wall, the image of the hollow sphere or the hollow cylinder comprises a light ring (13), the equation is

$$\frac{\pi}{2} + \arcsin\left(\frac{R_a}{n_1.R_2}\right) - \arcsin\left(\frac{R_a}{n_1.R_1}\right) + \arcsin\left(\frac{R_a}{R_1}\right) - 2.\arcsin\left(\frac{R_a}{R_2}\right) = 0$$

where $n_1$, $R_1$, $R_2$ and $R_a$ respectively represent the refraction index, the external radius, the internal radius of the sphere or the cylinder and the radius of the light ring, wherein the external radius of the sphere or cylinder and the radius of the light ring are determined on the basis of the image of the object and, $n_1$ being known, the thickness $R_1$-$R_2$ of the wall is determined on the basis of the external radius of the sphere or cylinder and on the basis of the radius of the light ring, by means of the equation.

5. Method according to any one of claims 2 to 4, wherein the object (14) is hollow and contains a layer (16) or a deposit of a material that is transparent or translucent, and the thickness of said deposit or said layer is determined.

6. Method according to claim 5, wherein the object (14) is a hollow sphere or a hollow cylinder, the geometric parameter of the object is the thickness of the layer (16) or of the deposit, the image of the hollow sphere or hollow cylinder comprises a light ring, the equation is

$$\frac{\pi}{2} - \arcsin\left(\frac{R_a}{R_1}\right) + \arcsin\left(\frac{R_a}{n_1.R_1}\right) - \arcsin\left(\frac{R_a}{n_1.R_2}\right) + \arcsin\left(\frac{R_a}{n_2.R_2}\right) - \arcsin\left(\frac{R_a}{n_2.R_3}\right) = 0$$

where $n_1$, $n_2$, $R_1$, $R_2$, $R_3$ and $R_a$ respectively represent the refraction index of the sphere or cylinder, the refraction index of the layer or the deposit, the external radius of the sphere or cylinder, the internal radius of the sphere or cylinder, the internal radius of the layer or deposit and the radius of the light ring, wherein the external radius of the sphere or cylinder and the radius of the light ring are determined on the basis of the image of the object and, $n_1$, $n_2$ and $R_2$ being know, the thickness $R_2$-$R_3$ of the layer or the deposit is determined on the basis of the external radius of the sphere or cylinder and on the basis of the radius of the light ring, by means of the equation.

7. Method according to either one of claims 4 and 6, wherein the external radius ($R_1$) is determined using the method of directional derivatives.

8. Method according to any one of claims 2 to 7, wherein the object is hollow and comprises an interval wall, and the reformation or the roughness of this internal wall is determined.

9. Method according to claim 3, wherein the object (9, 14) is a hollow sphere or a hollow cylinder, the optical parameter of the object is the refraction index of said object, the image of the hollow sphere or the hollow cylinder comprises a light ring (14), the equation is

$$\frac{\pi}{2} + \arcsin\left(\frac{R_a}{n_1.R_2}\right) - \arcsin\left(\frac{R_a}{n_1.R_1}\right) + \arcsin\left(\frac{R_a}{R_1}\right) - 2.\arcsin\left(\frac{R_a}{R_2}\right) = 0$$

where $n_1$, $n_2$, $R_1$, $R_2$ and $R_a$ respectively represent the refraction index, the external radius, the internal radius of the sphere or cylinder, and the radius of the light ring, wherein the radius of the light ring is determined on the basis of the image of the object, $R_1$ and $R_2$ are determined and the refraction index $n_1$ is determined at the wavelength of the visible light with which the object is observed, by means of the equation.

10. Method according to claim 9, wherein $R_1$ and $R_2$ are determined by radiography.

11. Method according to any one of claims 2 to 10, wherein an optical shadowgraphy device is used, which includes a visible light source, means (20) for collimation of this source and image acquisition means (22, 24, 26), comprising an optic (22) and an image sensor (26), said optic being placed between the object and the image sensor and making it possible to form the image of the section plane of the object studied on the image sensor, and the collimation of the source is adjusted.

**12.** Method according to claim 11, wherein the image sensor includes a charge transfer device.

**Patentansprüche**

1. Verfahren zum berührungsfreien Messen eines dreidimensionalen, für sichtbares Leicht durchscheinenden bzw. durchlässigen bzw. durchsichtigen Gegenstands bzw. Objekts (9, 14, 32), das Verfahren, dadurch gekenntzeichnet

   -- dass man mit Hilfe der die Ausbreitung des sichtbaren Lichts durch das Objekt hindurch betreffenden Snell - Descartesschen Gesetze eine Bleichung aufstellt, welche opto-geometrische Parameter des Objekts mit dem Ergebnis einer direkt an einem Bild des Objekts vorgenommenen Beobachtung verknüpft, wobei dieses Bild eignen Leuchtring umfasst und durch Beobachtung des Objekts mit sichtbarem Licht mittels optischer Ombroskopie mit einer einzigen Ansicht aufgenommen ist, und wobei die Gleichung den Radius des Leuchtrings enthalt,
   -- dass man dieses Bild des Objekts aufnimmt,
   -- dass man die Beobachtung vornimmt und den Radius des Leuchtrings anhand des Objektbilds bestimmt, und
   -- dass man weinigstens einen geometrischen oder optischen Parameter des Objekts mit Hilfe der Gleichung, des Leuchtring-Radius und des Ergebnisses der Beobachtung bestimmt.

2. Verfahren nach Anspruch 1, bei welchem das Bild mit Hilfe eines Systems zur Bildaufnahme mit sichtbaren Leicht aufgenommen wird, wobei die Fokussierung bzw. Scharfeinstellung dieses Bildaufnahmesystems auf eine Schnittebene des untersuchten Objekts erfolgt.

3. Verfahren nach Anspruch 2, bei welchem der Gegenstand bzw, das Objekt (9, 14, 32) hohl ist und man den geometrischen oder optischen Parameter dieses hohlen Objekts anhand des Bildes einer Schnittebene des Objekts bestimmt.

4. Verfahren nach Anspruch 3, bei welchem das Objekt eine Hohlkugel oder ein Hohlzylinder ist und das Objekt somit eine Wandung aufweiset, bei dem der geometrische Parameter des Objekts die Dicke dieser Wandung ist, bei dem das Bild der Hohlkugel oder des Hohlzylinders einen Leuchtring (13) aufweiset und bei dem die Gleichung wie folgt lautet

$$\frac{\pi}{2} + \arcsin\left(\frac{R_a}{n_1 R_2}\right) - \arcsin\left(\frac{R_a}{n_1 R_1}\right) + \arcsin\left(\frac{R_a}{R_1}\right) - 2.\arcsin\left(\frac{R_a}{R_2}\right) = 0$$

   worin n1, R1, R2 und Pa jeweils den Brecheungsindex, den Außenradius, den Innenradius der Kugel oder des Zylinders und den Radius des Leuchtrings darstellen und man den Außenradius der Kugel oder des Zylinders und den Radius des Leuchtrings an Hand des Objektbildes bestimmt und man, da n1 bekannt ist, die Dicke R1 - R2 der Wandung als Punktion in Abhängigkeit von dem Außenradius der Kugel oder des Zylinders und alls in Abhängigkeit von dem Radius des Leuchtrings mit Hilfe der Gleichung bestimmt.

5. Verfahren nach einem beliebigen der Ansprüche 2 bis 4, bei welchem das Objekt (14) hohl ist und eine Schicht (16) oder eine Abscheidung eines Materials enthält, die bzw. das durchscheinend oder durchsichtig ist, und bei welchem man die Dicke dieser Abscheidung oder dieser Schicht bestimmt.

6. Verfahren nach Anspruch 5, bei welchem das Objekt (14) eine Hohlkugel oder ein Hohlzylinder ist, der geometrische Parameter des Objekts die Dicke der Schickt (16) ist, das Bild der Hohlkugel oder des Hohlzylinders einen Leuchtring umfasst und die Gleichung lautet

$$\frac{\pi}{2} - \arcsin\left(\frac{R_a}{R_1}\right) + \arcsin\left(\frac{R_a}{n_1 R_1}\right) - \arcsin\left(\frac{R_a}{n_1 R_2}\right) + \arcsin\left(\frac{R_a}{n_2 R_2}\right) - \arcsin\left(\frac{R_a}{n_2 R_3}\right) = 0$$

worin n1, n2, R1, R2, R3 und Ra jeweils den Brechungsindex der Kugel oder des Zylinders, den Brechungsindex der Schicht oder der Abschedung, den Außenradius der Kugel oder des Zylinders, den Innenradius der Kugel oder des Zylinders, den Innenradius der Schicht oder der Abscheidung und den Radius des Leuchtrings darstellen, bei dem man den Außenradius der Kugel oder des Zylinders und den Radius des Leuchtrings an Hand des Bikles des Objekts bestimmt, und sodann, da n1, n2 und R2 bekannt sind, mit Hilfe der Gleichung die Dicke R2 - R3 der Schicht oder der Abscheidung bestimmt, als Funktion in Abhängigkeit von dem Außenradius der Kugel oder des Zylinders und als Funktion in Abhängigkeit von dem Radius des Leuchtrings.

7. Verfahren nach einem beliebigen der Ansprüche 4 und 6, bei welchem man den Außenradius (R1) mit Hilfe der Methode der direktionellen Ableitungen bestimmt.

8. Verfahren nach einer beliebige der Ansprüche 2 bis 7, bei welchem das Objekt hohl ist und eine innere Wandung aufweist und man die Verformung oder die Rauhigkeit bzw. Unebenheit dieser inneren Wandung bestimmt.

9. Verfahren nach Anspruch 3, bei welchem das Objekt (9, 14) eine Hohlkugel oder ein Hohlzylinder ist, der optische Parameter der Brechungsindex dieses Objekts ist, das Bild der Hohlkugel oder des Hohlzylinders einen Leuchtring (14) aufweist und die Gleichung folgendermaßen lautet

$$\frac{\pi}{2} + \arcsin\left(\frac{R_a}{n_1 R_2}\right) - \arcsin\left(\frac{R_a}{n_1 R_1}\right) + \arcsin\left(\frac{R_a}{R_1}\right) - 2.\arcsin\left(\frac{R_a}{R_2}\right) = 0$$

worin n1, R1, R2 und Ra jeweils den Brecheungsindex, den Außenradius, den Innenradius der Kugel oder des Zylinders und den Radius des Leuchtring darstellen, und man den Radius des Leuchtrings auf der Grundlage des Objektbildes bestimmt, bestimmt man R1 und R2 und den Brechungsindex n1 bei der Wellenlänge des sichtbaren Lichts, mit welchem man das Objekt beobachtet, mit Hilfe der Gleichung.

10. Verfahren nach Anspruch 9, bei welchem man R1 und R2 mittels Radiographie bestimmt.

11. Verfahren nach einem beliebigen der Ansprüche 2 bis 10, unter Verwendung einer optischen Ombroskopievorrichtung, welche eine Quelle für sichtbares Licht und Mittel (22) zur Kollimierung dieser Lichtquelle umfasst sowie Mittel (22, 24, 26) zur Aufnahme von Bildern mit einer Optik (22) und einem Bildempfänger (26), wobei diese Optik zwischen dem Objekt und dem Bildempfänger angeordnet ist und die Erzeugung des Bildes der Schnittebene des untersuchten Objekts auf dem Bildempfänger gestattet, unter entsprechender Regelung und Einstellung der Kollimation der Lichtquelle.

12. Verfahren nach Anspruch 11, bei welchem der Bildempfänger eine Vorrichtung mit Ladungsträgerüberführung bzw. -übertragung aufweist.

FIG. 1A

FIG. 1B

FIG. 1C

FIG. 2A

FIG. 2B

FIG. 2C

FIG. 3

FIG. 4

FIG. 5A

FIG. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2852389
- FR 0350045, F. Lamy
- US 4227806 A
- FR 2651312 A
- US 4168907 A

**Littérature non-brevet citée dans la description**

- **R. M. HARALICK.** Digital Step Edges from Zero Crossing of Second Directional Derivatives. *IEEE Transactions on pattern analysis and machine intelligence,* Janvier 1984, vol. PAMI-6 (1), 58-68